# EUROPEAN PATENT APPLICATION

(11) **EP 2 527 995 A1**
(43) Date of publication of application: **28.11.2012**
(21) Application number: 11851116.1
(22) Date of filing: 22.04.2011
(51) Int. Cl.: G06F 17/30, G06Q 10/00, G06Q 30/00

(54) **DATABASE, DATA-MANAGEMENT SERVER, AND DATA-MANAGEMENT PROGRAM**

(30) Priority: 21.12.2010 JP 2010284506
(71) Applicant: IPS Co., Ltd., Kobe-shi, Hyogo 650-0044 (JP)
(72) Inventor: AKITA, Toshifumi, Kobe-shi, Hyogo 6500044 (JP)
(74) Representative: Maggs, Michael Norman
(86) International application number: PCT/JP2011/002351
(87) International publication number: WO 2012/086096

(57) **Abstract**

A processing load required for updating and searching data is to be reduced in an ERP system.

A database is configured so as to include a process flow table PT in which process flow data containing various kinds of data regarding a process flow including a plurality of business processes are registered wherein: the process flow data contain status data, common data and process unique data; the status data are data indicating a progress situation of each of a plurality of business processes (for example, a received order, a shipment instruction, delivery, delivery acceptance inspection and sales) included in the process flow; the common data are data common among business processes included in the same process flow; the process unique data are data unique to each of the business processes included in the same process flow; and the status data are updated in the case where the process unique data are updated.

## Description

### CROSS REFERENCE TO RELATED APPLICATIONS

The present application is a U.S. national phase application under 35 U.S.C. §371 of PCT Application No. PCT/JP2011/002351, filed on April 22, 2011, and claims priority to and incorporates by reference Japanese Patent Application No. 2010-284506, filed on December 21, 2010.

### Technical Field

The present invention relates to a database available in an ERP system, a data management server including this database, and a data managing program product mounted on the data management server.

### Background Art

Heretofore, one so-called ERP (Enterprise Resource Planning) has been utilized as package software for establishing a core business system for a company.

As a system on which this ERP is mounted, one that causes core businesses in a company such as sales management, purchase management, inventory management, production management, financial accounting, managerial accounting to cooperate with each other in real time, whereby information on each of the businesses is managed in an integrated fashion, is well known.

In such a system (ERP system or integrated core business system), for example, there is also a data converting apparatus, which is connected to both an integrated business system that carries out information control of management resources and carries out communication of information with a first data format defined in advance and a plurality of information apparatuses each of which carries out communication of information with a second data format that is different from the first data format. By configuring the system so as to incorporate thereinto the data converting apparatus that receives an input of information with the first data format outputted from the integrated business system; converts the format of the received information into the second data format; and transmits the converted information to the information apparatus, convenience of the system is to be heightened (see Patent Literature 1).

### Prior Art Literature

### Patent Literature

Patent Literature 1: Japanese Patent Application Publication No. 2009-099070

### Summary of the Invention

### Problems to be solved by the Invention

However, a conventional ERP system respectively registers data (containing data inputted by a user and data calculated from various kinds of data) acquired in each business process in dedicated data tables (tables) and manages the registered data. Namely, in the conventional ERP system, a table to be updated is different from the others for every input process such as a received order and a shipment instruction. In this regard, the "input process" means a process to input various kinds of data acquired (or determined) by a manager of the ERP system into the respective tables in the business processes.

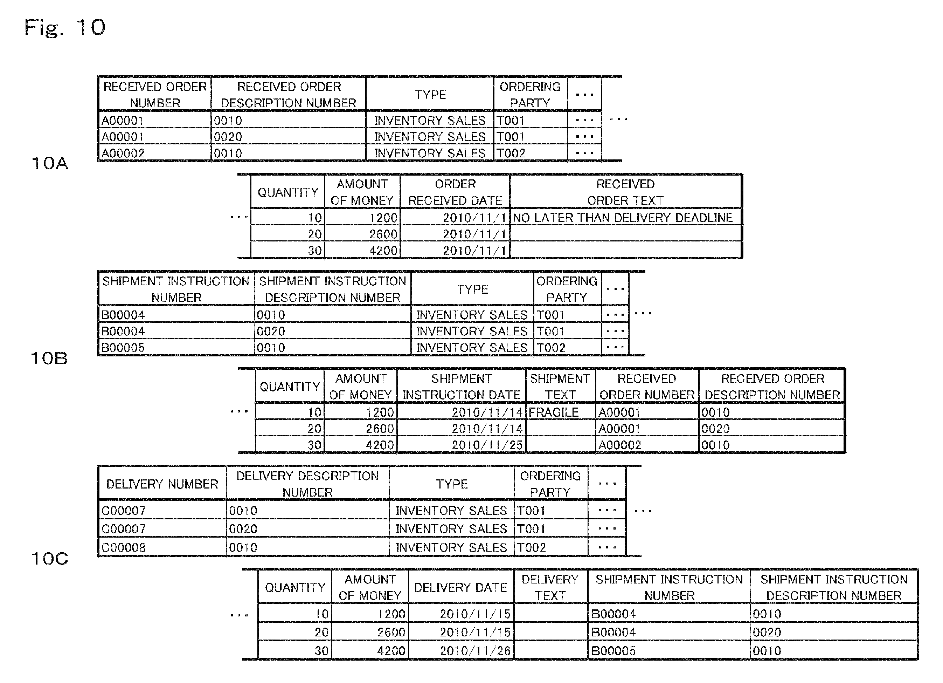

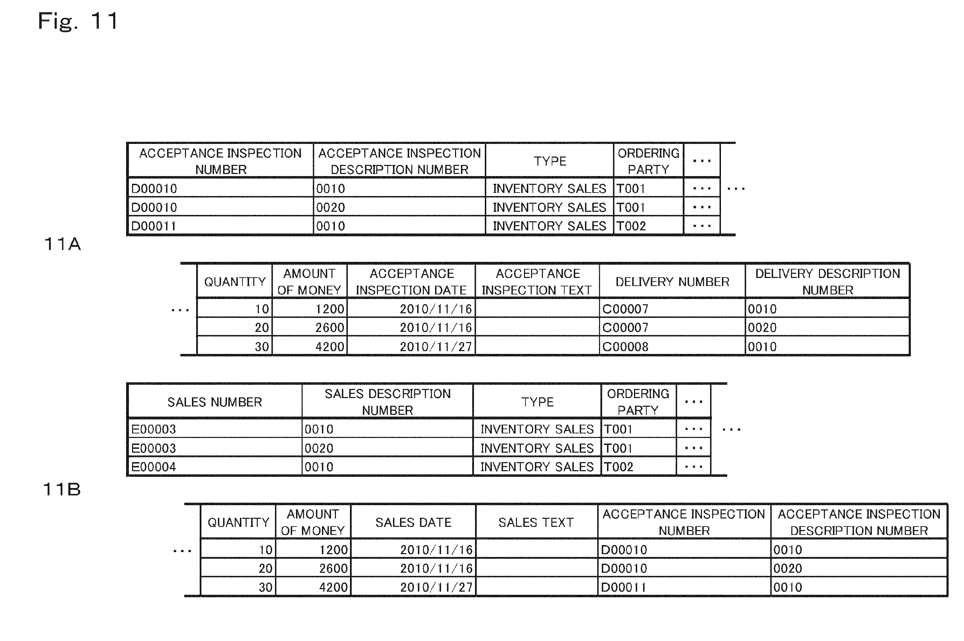

FIGS. 10 and 11 are explanatory drawings explaining an example of a table configuration in a conventional ERP system. For example, in the case where a business flow (process flow) constituted by a plurality of business processes denotes "inventory sales", there are five input processes including a received order, a shipment instruction, delivery, acceptance inspection, and sales. In this case, there are five tables for storing data on the process flow of the "inventory sales", including a received order table, a shipment instruction table, a delivery table, an acceptance inspection table and a sales table for each of the input processes, for example, as shown in FIGS. 10A to 10C, FIGS. 11A and 11B.

Namely, in the conventional ERP system, the tables updated for every input process have been different from each other. For that reason, association among a plurality of business processes that belong to the same process flow has been carried out by applying an identifier (in FIGS. 10 and 11, a received order number and received order description in the shipment instruction table, a shipment instruction number and shipment instruction description in the shipment table, and the like) to the data (process data) regarding the respective business processes.

For that reason, in the conventional ERP system, specification of a table according to a kind of input process and an input of an identifier for other corresponding process data have been required for one input process. Namely, for example, in the case where process data regarding a business process "shipment instruction" related to process data specified by a received order number "A00001" and a received order description number "0010" (that is, various kinds of data stored in the same row as the received order number "A00001" and the received order description number "0010" in the received order table) are registered in a database included in the ERP system as shown in FIGS. 10 and 11, there is a need to register the received order number "A00001" and the received order description number "0010" in the shipment instruction table as the process data regarding the business process "shipment instruction" in addition to a shipment instruction number and a shipment instruction description number for specifying the process data, a type indicating a kind of business process, and data indicating the content of the business process (for example, an ordering party, quantity, the amount of money, shipment instruction date, a shipment text and the like). This is a problem in view of effective data processes (for example, data a part of which is the same (for example, an ordering party or quantity, the amount of money, or the like) are registered in the plurality of tables.

Further, in the conventional ERP system, in the case where a report according to a request of a user is created using various kinds of data stored in various kinds of tables, there is a need to search necessary process data by tracking an identifier of process data and to acquire them separately. For this reason, there has been a problem that a processing load required for outputting the report regarding the process flow becomes excessive in the case where the process flow contains a large number of business processes.

It is an object of the present invention to resolve the problems described above and to reduce a processing load required for updating and/or searching data in an ERP system.

### Means for Solving the Problems

According to the present invention, there is provided a database including a process flow table, process flow data being registered in the process flow table, the process flow data containing various kinds of data on a process flow including a plurality of business processes, wherein the process flow data are data containing status data, common data and process unique data, wherein the status data are data indicating a progress situation of each of a plurality of business processes included in the process flow, wherein the common data are data common among business processes included in the same process flow, wherein the process unique data are data unique to each of the business processes included in the same process flow, and wherein the status data are updated in the case where the process unique data are updated.

By configuring it as described above, it becomes possible to reduce a processing load required for updating and/or searching data in an ERP system.

The database may be configured so as to be provided in a process flow data management server that manages the process flow data generated for every process flow and so that the process flow data management server includes a process flow data providing section for providing a part or all of the process flow data to a client terminal in response to a request from the client terminal.

The database may be configured so as to further include a progress situation determining condition table in which progress situation determining condition data are registered, the progress situation determining condition data being data indicating a determination condition of a progress situation of the process flow, wherein the process flow data management server includes: a progress situation determining section for determining whether the status data satisfies the progress situation determining condition or not on the basis of the progress situation determining condition; and a progress situation informing section for informing the client terminal of a progress situation according to the progress situation determining condition that the progress situation determining section determines to be satisfied.

The database may be configured so that the progress situation determining condition data contain a completion condition for determining whether the process flow is completed or not.

Further, according to the present invention, there is a provided a data management server for providing various kinds of data to a client terminal, the data management server including: a process flow data storage section for storing process flow data containing various kinds of data on a process flow, the process flow containing a plurality of business processes; a process flow data updating section for updating the process flow data in accordance with a progress situation of the process flow; and a process flow data providing section for providing, to the client terminal, a part or all of the process flow data in response to a request from the client terminal, wherein the process flow data are data containing status data, common data and process unique data, wherein the status data are data indicating a progress situation of each of a plurality of business processes included in the process flow, wherein the common data are data common among business processes included in the same process flow, wherein the process unique data are data unique to each of the business processes included in the same process flow, and wherein the process flow data updating section updates the status data in accordance with an update status of the process unique data.

Moreover, according to the present invention, there is provided a data managing program product for controlling an operation of a data management server so as to provide various kinds of data to a client terminal, the data managing program product causing the data management server to execute: a process flow data updating process to update process flow data stored in a process flow data storage section in accordance with a progress situation of a process flow, the process flow data storage section storing therein process flow data containing various kinds of data on the process flow, the process flow containing a plurality of business processes; and a process flow data providing process to provide, to the client terminal, a part or all of the process flow data in response to a request from the client terminal, wherein the process flow data are data containing status data, common data and process unique data, wherein the status data are data indicating a progress situation of each of a plurality of business processes included in the process flow, wherein the common data are data common among business processes included in the same process flow, wherein the process unique data are data unique to each of the business processes included in the same process flow, and wherein, in the process flow data updating process, the data management server is caused to execute a process to update the status data in accordance with an update status of the process unique data.

### Effects of the Invention

According to the present invention, it becomes possible to reduce a processing load required to update and/or search data in an ERP system.

### Brief Description of the Drawings

FIG. 1 is a block diagram showing a configuration example of an integrated core business system according to one embodiment of the present invention.
FIG. 2 is an explanatory drawing showing an example of a storage state of process flow data.
FIG. 3 is a flowchart showing an example of a database updating process.
FIG. 4 is a flowchart showing an example of a report outputting process.
FIG. 5 is an explanatory drawing showing an example of a search key input screen.
FIG. 6 is an explanatory drawing showing an example of a report display screen.
FIG. 7 is an explanatory drawing for explaining transition of a report status based upon a state of process flow data.
FIG. 8 is an explanatory drawing explaining usefulness of a database updating process.
FIG. 9 is an explanatory drawing showing an example of a storage state of progress situation determining condition data.
FIG. 10 is an explanatory drawing explaining an example of a table configuration in a conventional ERP system.
FIG. 11 is an explanatory drawing explaining an example of a table configuration in a conventional ERP system.

### Mode for Carrying out the Invention

Hereinafter, an example of one embodiment according to the present invention will be described with reference to the drawings.

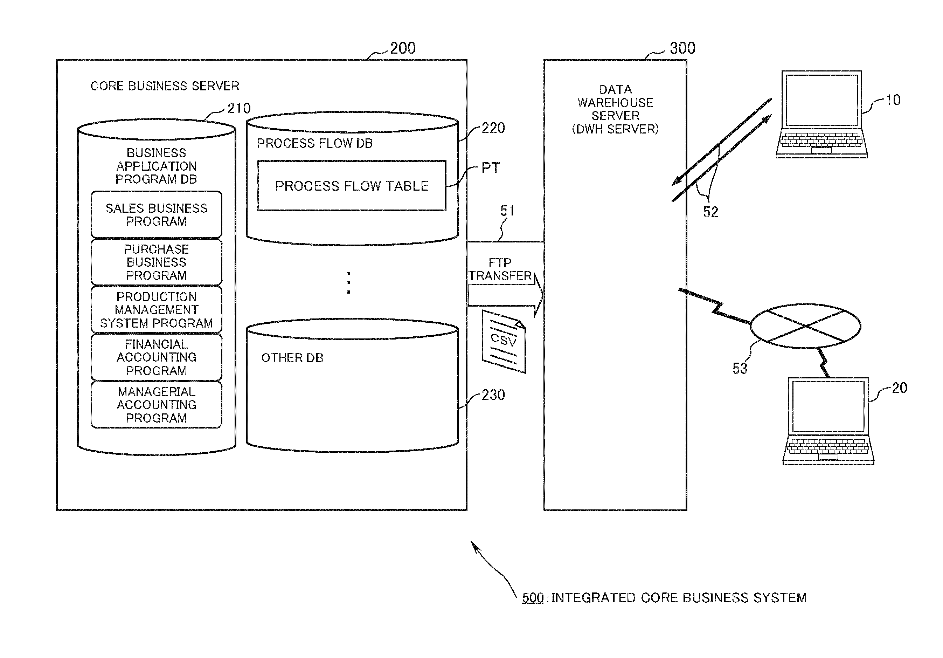

FIG. 1 is a block diagram showing a configuration example of an integrated core business system 500 according to one embodiment of the present invention. As shown in FIG. 1, the integrated core business system 500 includes a core business server 200, a data warehouse server (DWH server) 300, a client 10 and a client 20. The respective elements constituting the integrated core business system 500 are connected to each other via a communication network.

In the present embodiment, the core business server 200 is connected to the DWH server 300 via a dedicated line 51. Further, the client 10 is connected to the DWH server 300 via a LAN (Local Area Network) 52. Further, the client 20 is connected to the DWH server 300 via the Internet 53.

The core business server 200 is a server managed by a manager of the integrated core business system 500, for example, and has various kinds of functions for managing process data that are data indicating information on various kinds of business processes, such as report information on various kinds of businesses. In this regard, the core business server 200 according to the present embodiment is configured by a general information-processing apparatus provided with an OS (Operating System) and a relational database (relational DB).

Here, the report is the general term of books, slips and the like. Further, the books denote one in which matters concerning accounts of money or goods are filled, and the slips denote data that become a basis for creating books and constitute evidence of transactions and the like on a business. In this regard, the core business server 200 may be configured so as to deal with process data indicating only slip information used to create various kinds of slips, for example.

Further, as shown in FIG. 1, the core business server 200 according to the present embodiment includes: a business application program DB 210; a process flow DB 220; and an other DB 230 for storing various kinds of data required for realizing functions as a general core business server (for example, data used by various kinds of programs stored in the business application program DB 210). In this regard, since the other DB 230 is a portion with no relationship to the present invention in particular, detailed explanation thereof is omitted.

The business application program DB 210 is a storage medium for storing programs used for various kinds of businesses. A sales business management program, a purchase business management program, a production management program, a financial accounting management program, a managerial accounting management program and the like are included in the programs stored in the business application program DB 210.

The process flow DB 220 is a storage medium for storing process flow data configured by various kinds of processes data (or report data) that are collected, marshaled or the like by means of various kinds of information processes using various kinds of programs stored in the business application program DB 210. In the present embodiment, the case where process flow data containing various kinds of data on a process flow including a plurality of business processes are stored in a process flow table PT of the process flow DB 220 will be described. Further, in the present embodiment, the case where the core business server 200 manages process flow data generated for every process flow in the process flow table PT in an integrated fashion will be described.

In this regard, the core business server 200 may be configured so as to manage, using a plurality of tables, process flow data for every type (will be described later) or for whatever a part of the content of common data (for example, an ordering party or the like, will be described later) is the same, for example.

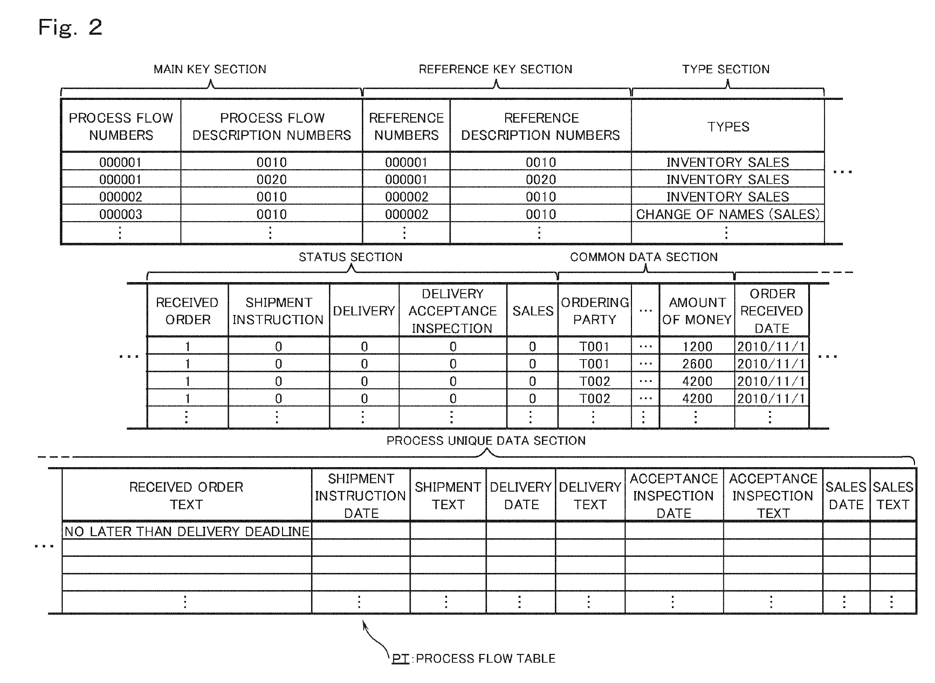

FIG. 2 is an explanatory drawing showing an example of a storage state of process flow data in the process flow DB 220. As shown in FIG. 2, the process flow data according to the present embodiment contain: a main key section; a reference key section; a type section; a status section; a common data section; and a process unique data section. In this regard, items corresponding to the respective sections of the process flow data (that is, the respective column items in the process flow table PT) denote the kinds of process data that constitute the process flow data. Namely, the data regarding each of the business processes that constitute the process flow are assigned to the respective sections that constitute the process flow data and stored. In this regard, process data regarding one process flow (for example, a series of process flow from a received order from a company to delivery) are stored in the same entry of the process flow table PT (that is, the same line in the process flow table PT). By configuring it in this manner, it is possible to define a correspondence relationship among the respective process data.

Here, the "main key section" is a portion in which main key data that are data for uniquely specifying process flow data are stored among the process flow data. In the present embodiment, the main key section is constructed by a process flow number and a process flow description number. Namely, in the present embodiment, a combination of the process flow number and the process flow description number becomes an identifier (ID) of each of the process flow data. The main key section is updated at the first registration of the process flow. In this regard, the word "at the first registration of the process flow" herein means the time when entry (data line) is added to the process flow data, for example, the time when unregistered process data that are other corresponding process data belonging to a certain process flow are registered. Further, the "update" herein includes addition of data.

In this regard, the "process flow number" is an identifier for specifying one process flow data (that is, one line in the process flow table PT shown in FIG. 2). The process flow number is applied to process data whose predetermined items are the same as each other. In the present embodiment, as the process flow number, the same number is to be applied to process flow data whose type and ordering party are the same in the process flow data.

Further, the "process flow description number" is an identifier for specifying specific process flow data from among the process flow data to each of which the same process flow number is applied. Namely, for example, in the process flow table PT shown in FIG. 2, it is possible to uniquely specify process flow data containing process data, which indicate that an order for businesses with the amount of money "1200" and "2600" is received from an ordering party "T001", in a business process "received order" of a type "inventory sales" of the process flow by means of a combination of a process flow number "000001" and a process flow description number "0010" or "0020".

Subsequently, the "reference key section" is a portion in which reference key data that are data for specifying other process flow data (or other process data) related to the process flow, such as an original transaction with respect to returned goods of sales, in the process flow data are stored. In the present embodiment, the reference key section is configured by a reference number and a reference description number. The reference key section is updated at the first registration of the process flow.

In this regard, a process flow number and a process flow description number of other process flow related to the process flow are stored in the reference number and the reference description number, respectively. However, in the case where there is no other process flow related to the process flow, such as the case of a new transaction, data indicating the same value as the main key section of the same entry are stored in the reference key section (that is, the process flow number and the process flow description number are respectively stored in the reference number and the reference description number). Further, in the case where the reference key section indicates other process data related to the process flow, data for specifying a kind of process data are further provided in the reference key section.

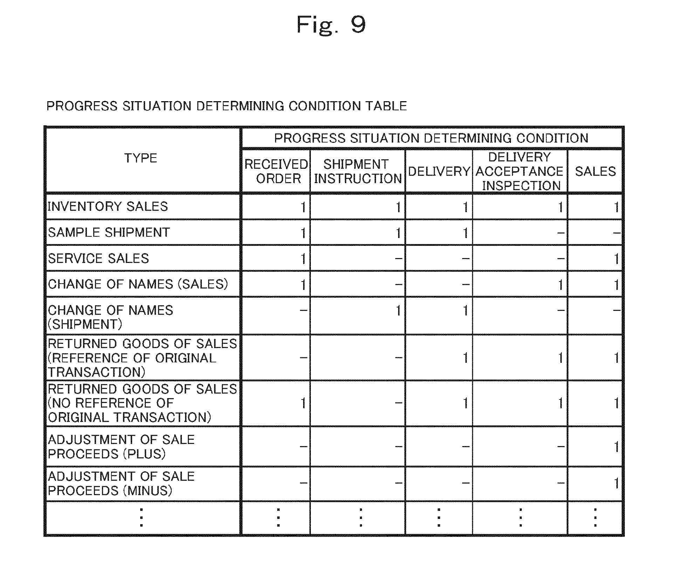

Further, the "type section" denotes a portion in which type data that are data indicating a kind of the process flow such as inventory sales or sample shipment among the process flow data are stored. The type section is updated at the first registration of the process flow. In this regard, the kind of process flow is not limited to inventory sales or sample shipment. Further, it is determined what process is necessary in advance for every kind of process flow (that is, the kinds and the number of business processes included in the kind of process flow are different). In this regard, other plural kinds of process flows will be presented later (see FIG. 9).

Further, the "status section" is a portion in which status data that are data of process flow data representing progress of a process flow (that is, data indicating a progress situation of each of a plurality of business processes included in the process flow) are stored. In the present embodiment, as the status data, with respect to business processes required by the process flow, "0" is set to uncompleted ones, and "1" is set to completed ones, thereby indicating progress of each of the business processes. Namely, for example, in the case where business processes included in a process flow of "inventory sales" are a "received order", "shipment", "delivery", "delivery acceptance inspection" and "sales" as shown in FIG. 2, process unique data (for example, order received date) regarding the business process "received order" are registered. In this case, as the status data, "1" is set to a portion corresponding to "sales", and the other portions remain as an initial state (that is, a state in which "0" is set up).

Namely, the status section according to the present embodiment is updated for each of the business processes. In other words, when process unique data (will be described later) are inputted, more specifically, when it is determined that each of the business processes is completed on the basis of satisfaction of a predetermined status changing condition, the status section is updated. In this regard, although the status changing condition is not limited in particular, in the present embodiment, a condition that "all of process unique data corresponding to one business process are inputted" is stored in a predetermined storage region of the core business server 200 as the status changing condition.

In this regard, in the present embodiment, since different kinds of process flows are stored in the same table, a portion in which unnecessary process data are stored may be generated in a specific process flow of items (line items) that constitute tables. In this case, in the process flow table, a portion in which the unnecessary process data are stored becomes blank data, and "0" is stored in the status data corresponding to the blank data.

Further, the "common data section" is a portion in which common data that are data independent of the business processes of the process flow data, such as an ordering party and a shipment address, (that is, data common among the business processes included in the same process flow) are stored. The common data section is updated at the first registration of the process flow.

Further, the "process unique data section" is a portion in which process unique data that are unique data for each of the business processes included in the same process flow, such as data registered in the order received date and each of the business processes of the process flow data (for example, text data indicating a precaution statement such as "No later than delivery deadline" or "Fragile (Be careful with fragile items)") and the like, are stored. The process unique data section is updated for every business process. Therefore, in the present embodiment, ones dependent upon each business process are the "process unique data" and ones independent from any business process are "common data" of the process flow data.

The above is explanation regarding the process flow data according to the present embodiment. Here, definition of various kinds of terms shown in FIG. 2 will be explained briefly.

First, the "received order" means a state that an order is received from a customer and a contract is made with the customer. Further, the "shipment instruction" means a state that an instruction to ship out goods is carried out to a warehouser or a person for distribution of the goods. Further, the "delivery" means a state that the goods are shipped out from a warehouse and its movement is started. Further, the "acceptance inspection" means a state that acceptance inspection by the customer is completed and ownership of the goods is shifted to the customer. Further, the "sales" means a state that the acceptance inspection by the customer is confirmed and the amount of claims to the customer is determined (= a claim is posted).

Further, the term "acceptance inspection" is also used in the sense of a "business to inspect whether incoming goods or service has a specification as ordered (= quantity, a color or a shape and quality as ordered) or not" or in the sense that "ownership of assets is shifted at completion of the acceptance inspection". In this regard, in order to make clear timing of shift of the ownership of the assets, an event "acceptance inspection" is defined in distinction from delivery on financial accounting (or on legal financial accounting) or on the ERP system.

The core business server 200 has a function to convert various kinds of data stored in the process flow DB 220 and the other DB 230 into a CSV (Comma Separated Values) format in accordance with a predetermined extract condition, and a function to transmit the converted data to the DWH server 300. In this regard, in the present embodiment, the core business server 200 transfers the data file converted into the CSV format to the DWH server 300 by means of FTP (File Transfer Protocol).

The DWH server 300 is a server managed by a system manager of the present system, for example, and has various kinds of functions for realizing a data warehouse. Here, the "data warehouse" denotes a system to analyze the association among the individual items from among business data (in the present embodiment, the process flow data) such as report data accumulated in time series. Further, the DWH server 300 has a function to convert a file with a CSV format transferred from the core business server 200 into a predetermined data format, and a function to register various kinds of data in a predetermined storage region. In this regard, the DWH server 300 may be configured so as to extract data according to the respective storage regions from the state of the CSV format without conversion of the data format.

Each of the clients 10, 20 is an information-processing apparatus (client terminal) provided with a CPU (Central Processing Unit), a ROM, a RAM, a display section and the like. In the present embodiment, each of the clients 10, 20 has various kinds of applications available to deal with report data, such as a Web browser, spreadsheet software and the like. Further, in the present embodiment, each of the clients 10, 20 has a function to define a query (a search item, a search key, an extract key or the like) for acquiring necessary report data (in the present embodiment, process flow data) from the DWH server 300 in response to an operation input by a user, and a function to transmit the defined query to the DWH server 300, for example.

In the present embodiment, the client 10 has a function to communicate with the DWH server 300 via the LAN, and a function to output the data acquired from the DWH server 300 onto the display section by means of predetermined spreadsheet software.

Further, the client 20 communicates with the DWH server 300 via the Internet, and has a function to output the acquired data from the DWH server 300 to the display section by means of the Web browser.

In this regard, in the present embodiment, each of the clients 10, 20 has a function to output a report with a predetermined form onto the display section included in the client 10, 20 itself on the basis of the process flow data stored in the process flow DB 220 of the core business server 200.

In this regard, the configuration of the integrated core business system 500 is not limited to this, and the clients 10, 20 and the core business server 200 may be configured so as to carry out direct transmission and reception of data via the DWH server 300, for example. Namely, each of the clients 10, 20 may be configured so as to be allowed to directly access to the process flow DB 220.

Next, an operation of the core business server 200 in the integrated core business system 500 will be described with reference to the drawings. In this regard, the content of operations and processes with no relationship to the present invention in particular may be omitted.

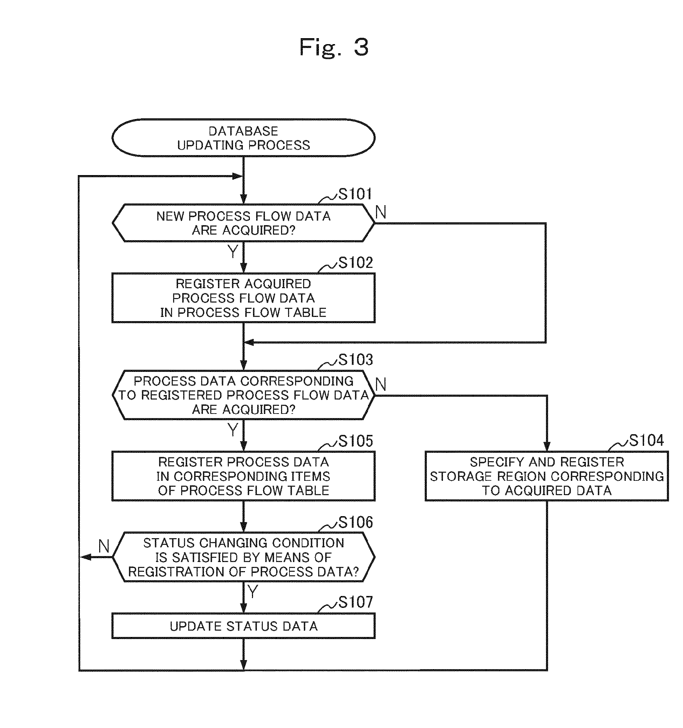

FIG. 3 is a flowchart showing an example of a database updating process carried out by the core business server 200. In the database updating process, a process to update the process flow DB 220 is carried out in the core business server 200.

In the database updating process, the core business server 200 first determines whether new process flow data (new process flow data) are acquired or not (Step S101). Here, in the case where it is determined that the new process flow data are not acquired ("No" at Step S101), the core business server 200 shifts to a process at Step 5103 (will be described later).

On the other hand, in the case where it is determined that the new process flow data are acquired ("Yes" at Step S101), the core business server 200 registers the acquired process flow data in the process flow table PT (Step S102).

Subsequently, the core business server 200 determines whether process data corresponding to the registered process flow data (that is, data regarding the business processes that constitute the process flow) are acquired or not (Step S103) . Here, in the case where it is determined that the process data corresponding to the registered process flow data are not acquired ("No" at Step S103), the core business server 200 refers to the other DB 230; specifies a storage region corresponding to the acquired data; registers the acquired data (Step S104), and shifts to the process at Step S101.

On the other hand, in the case where it is determined that the process data corresponding to the registered process flow data are acquired ("Yes" at Step S103), the core business server 200 registers the process data in corresponding items of the process flow table PT (Step S105).

In this regard, determination of whether the process data acquired by the core business server 200 are registered process data or not is carried out by determining whether process flow data containing a combination of a process flow number and a process flow description number contained in the acquired data are stored in the process flow table PT or not. For that reason, in the present embodiment, there is a need that data constituting the main key section (that is, the process flow number and the process flow description number) are contained in the data (data inputted by a prosecutor of the business or data created by a business application program) acquired by the core business server 200.

When the process data are registered, the core business server 200 determines whether a predetermined status changing condition regarding the process flow data is satisfied by means of registration of the process data or not (Step S106). Here, in the case where it is determined that the predetermined status changing condition is not satisfied in accordance with the fact that the process data are registered ("No" at Step S106), the core business server 200 shifts to the process at Step S101.

On the other hand, in the case where it is determined that the predetermined status changing condition is satisfied in accordance with the fact that the process data are registered ("Yes" at Step S106), the core business server 200 updates the status data contained in the process flow data on the basis of the satisfied status changing condition (Step S107), and shifts to the process at Step S101.

The database updating process according to the present embodiment is terminated by means of an exit operation by the manager of the core business server 200, for example.

Further, the database updating process may be a process carried out in real time, or it may be a batch process carried out every specific unit of time. Further, it may be a process (quasi real time process) with a real time property as a part, so that a real time process is carried out only for a specified period of time, for example.

Next, operations of the core business server 200, the DWH server 300 and the clients 10, 20 in the integrated core business system 500 according to the present embodiment will be described with reference to the drawings. In this regard, the content of operations and processes with no relationship to the present invention in particular may be omitted.

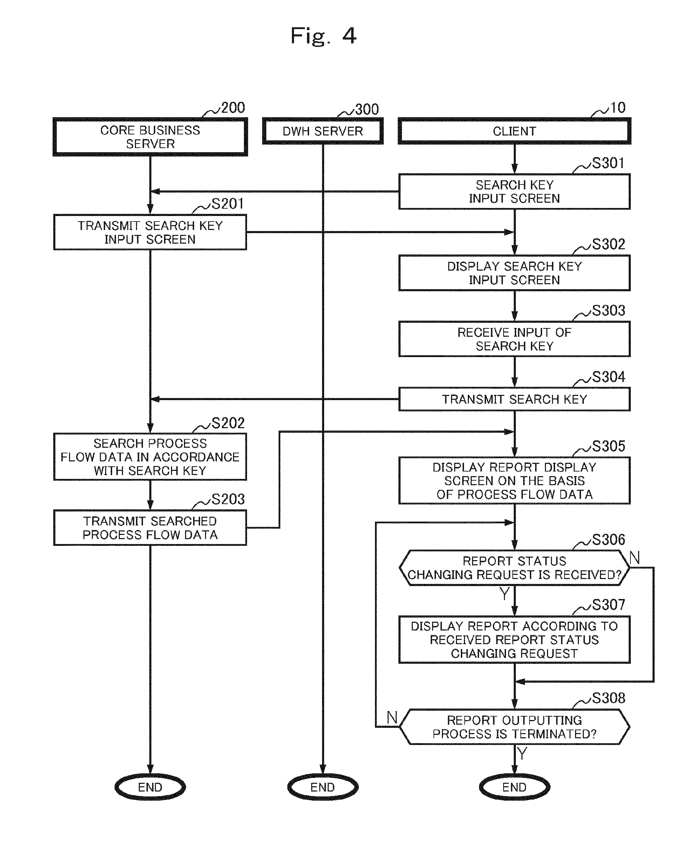

FIG. 4 is a flowchart showing an example of a report outputting process carried out by the core business server 200, the DWH server 300 and the client 10. In the report outputting process, the core business server 200 provides process flow data (a part or all of the process flow data) to the client 10 via the DWH server 300, by which a process to display a report on a display screen with which the client 10 is provided is carried out. In this regard, since a kind of communication network of the client 10 is different from that of the client 20 merely, the case of using the client 10 will be described as an example in the present embodiment. Further, since the DWH server 300 according to the present embodiment merely carries out assistance for communication between the core business server 200 and the client 10 (for example, authentication of a client and the like), explanation of an operation of the DWH server 300 is omitted hereinafter.

In the report outputting process, the client 10 first transmits a request for a search key input screen to the core business server 200 in response to an operation input by a user A of the client 10, for example (Step S301).

When the request for the search key input screen is received, the core business server 200 transmits a search key input screen according to the received request for the search key input screen (Step S201).

When the search key input screen is received, the client 10 displays the search key input screen on the display screen of the display section included in the client 10 itself (Step S302).

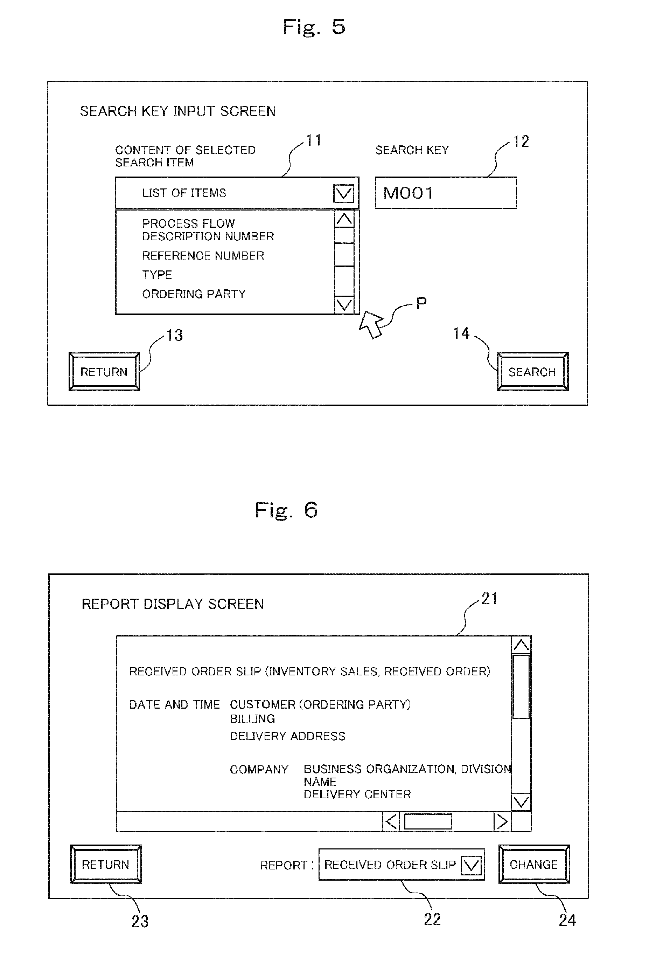

FIG. 5 is an explanatory drawing showing an example of the search key input screen. As shown in FIG. 5, a search item display region 11 in which items set up in the process flow table PT are selectably displayed in a pull-down format, a search key input region 12 for receiving an input of a search key by the user A, a return button 13 for receiving a request to switch the display screen outputted to the display section into other display screen, and a search button 14 for receiving a request to search the process flow data by means of the search item and the search key are provided on the search key input screen.

When the client 10 receives selection of a search item by means of a cursor P operable by a mouse operation, for example, the selected search item is set to a temporary selection state. Then, when selection of the search button 14 is received, the client 10 determines that the selection of the search item that is in the temporary selection state (the present selection) is received (Step S303), and transmits, to the core business server 200, the selected search item and the search key inputted in search key input region 12 (Step S304).

When the search item and the search key are received, the core business server 200 searches, from the process flow data registered in the process flow table PT, process flow data for which the same character string as the received search key (or including the received search key) is registered in the item indicated by the received search item (that is, the row item in the process flow table PT) (Step S202). In this regard, the core business server 200 may be configured so as to search all of the process flow data containing process data in the received search item (that is, in which data other than blank data are stored in the received search item) in the case where the search key is blank data at this time, or may be configured so as to transmit search error notification to the client 10.

When the process flow data are searched, the core business server 200 transmits the searched process flow data to the client 10 (Step S203), and terminates the process herein.

On the other hand, when the process flow data are received, the client 10 displays a report display screen on the display screen of the display section included in the client 10 itself on the basis of the received process flow data (Step S305).

FIG. 6 is an explanatory drawing showing an example of the report display screen. As shown in FIG. 6, a report display region 21 for displaying a report based upon the process flow data, a report status display region 22, a return button 23 and a change button 24 are provided on the report display screen. In this regard, the client 10 changes a scale size of the report displayed on the report display region 21 in response to an operation of a keyboard included in the client 10 or the like, for example.

Here, a part or all of the process flow data is displayed in the report display region 21 in a predetermined display form. In this regard, in the present embodiment, information for displaying a part or all of the process flow data in a predetermined display form is created by the core business server 200, for example, and is transmitted to the client 10 in the timing at Step S203 in the report outputting process. In this regard, the client 10 may be configured so as to display a part or all of the received process flow data in the report display region 21 in a predetermined display form on the basis of information stored in a storage device included in the client 10 itself.

Further, the report status display region 22 is a region for displaying a kind (or status (hereinafter, referred to as the "status")) of the report displayed in the report display region 21. In this regard, as the status of the report, for example, various ones such as a received order slip, a delivery slip, an acceptance inspection slip, a bill and the like are thought.

Further, the return button 23 is a button for receiving a request to return the display screen to the search key input screen. Further, the change button 24 is a button for receiving a request to change the display content of the report display region 21. Hereinafter, a process to change the display content of the report display region 21 will be described.

When the report display screen is displayed, the client 10 determines whether a report status changing request is received from the user A or not (Step S306).

In the present embodiment, the client 10 first receives selection of the report status display region 22 from the user A. Then, for example, when selection of the report status display region 22 by means of the cursor P operable by a mouse operation is received, the client 10 selectably displays a list of report status names indicating a displayable form of the report in a pull-down format, for example.

In this regard, the report status name displayed herein is received from the core business server 200 together with the process flow data. More specifically, the core business server 200 specifies a report status name indicating a displayable form of the report on the basis of data (report form data) on a form of the report stored in a predetermined storage region in advance and a state of the process flow data (that is, an input state of each line item of the process flow table PT). Namely, for example, in the case where a type of the process flow data transmitted to the client 10 is "inventory sales" and only the process data on the business process "received order" are registered in the process unique data section, the core business server 200 specifies only a "received order slip" as the report status name. Further, in the case where process data regarding the business process "delivery" are registered in addition to a process data regarding a business process "received order", the core business server 200 specifies a "received order slip" and a "delivery slip" as the report status name.

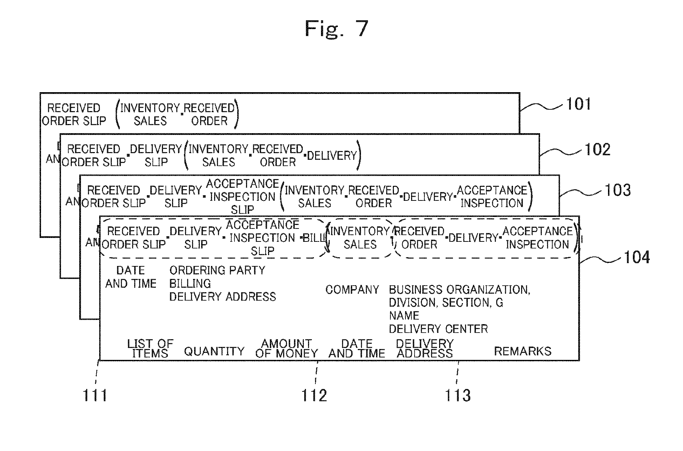

FIG. 7 is an explanatory drawing for explaining transition of a report status based upon a state of the process flow data. In FIG. 7, each of images 101 to 104 is a form of a report (more specifically, a slip) to be displayed on the report display region 21 on the basis of the process flow data. In this regard, the images 101 to 104 are explanatory drawings for explaining transition of a report status, and do not indicate concrete described examples for playing a role as various kinds of reports.

Here, the image 104 will be described as an example. A region 111, a region 112 and a region 113 in the image 104 are respectively regions (in the present embodiment, character string display regions) indicating a report status name, a type of a process flow and a name of a business process of process data contained in the process flow data. In this regard, in the present embodiment, a report status name corresponding to a kind of process data contained in the process flow data is displayed in the region 111.

In this case, as shown by transition from the image 101 to the image 104 in FIG. 7, kinds of report status names (that is, forms of the report that can be displayed on the basis of the process flow data) are increased whenever process data according to each of business processes are registered for one process flow data. This does not mean "whether there is a next kind of report or not", but means that "a status of the report is raised in accordance with a state of the process flow data (that is, kinds of displayable reports are increased)".

Hereinafter, the explanation is continued using the case where the client 10 receives the process flow data containing business processes "received order" and "delivery" before the process at Step S305 in the report outputting process as an example. In this regard, in the present embodiment, in the process at Step S305, the client 10 displays, in the report display region 21, a report of a report status name "received order slip" corresponding to the business process "received order", which is positioned above the business process "delivery" in the process flow indicated by the received process flow data (see FIG. 6).

In the case where it is determined in the process to determine reception of the report status changing request (Step S306) that the report status changing request is not received from the user A ("No" at Step S306), the client 10 shifts to a process at Step S308 (will be described later).

On the other hand, in the case where it is determined that the report status changing request is received from the user A ("Yes" at Step S306), the client 10 displays the report according to the received changing request on the report display region 21 (Step S307). In the present embodiment, the client 10 receives selection of a report status name "delivery slip" corresponding to a business process "delivery" from the user A, and displays the report (delivery slip) corresponding to the business process "delivery" on the report display region 21. In this regard, in this case, the client 10 displays the report status name "delivery slip" on the report status display region 22.

When the report according to the report status changing request is displayed, the client 10 determines whether the report outputting process is to be terminated or not (Step S308). Here, in the case where it is determined that the report outputting process is not to be terminated ("No" at Step S308), the client 10 shifts to the process at Step S306.

On the other hand, in the case where it is determined that the report outputting process is to be terminated, for example, by receiving a predetermined exit operation by the user A ("Yes" at Step S308), the client 10 terminates the process herein.

As explained above, in the embodiment described above, the database (for example, the process flow DB 220) is configured so as to include the process flow table PT in which process flow data containing various kinds of data on a process flow (for example, the process flow of the type "inventory sales") including a plurality of business processes are registered; so that: the process flow data contain the status data, the common data and the process unique data; the status data are data indicating a progress situation of each of a plurality of business processes (for example, the received order, the shipment instruction, the delivery, the delivery acceptance inspection and the sales) included in the process flow; the common data are data (for example, the data indicating ordering party, the amount of money and the like) common among business processes included in the same process flow; the process unique data are data (for example, the order received date and the received order text) unique to each of the business processes included in the same process flow; and the status data are updated in the case where the process unique data are updated (for example, the corresponding status data are changed from "0" to "1" in the case where the process unique data are added) . Therefore, it becomes possible to reduce a processing load required to update and/or search data in an ERP system.

Namely, it becomes possible to reduce the amount of I/O data (input and output data) generated at the time of update of data.

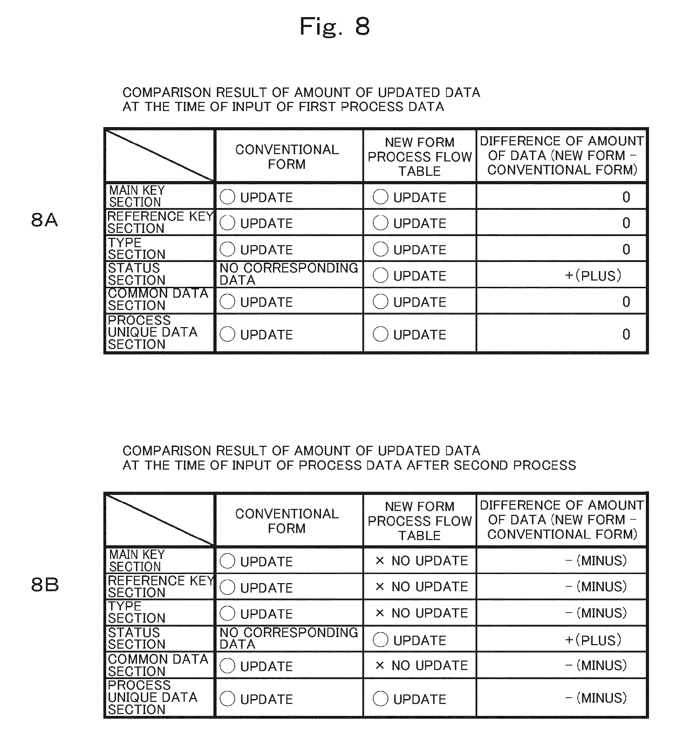

FIG. 8 is an explanatory drawing explaining usefulness of a database updating process carried out by the core business server 200 described above.

FIG. 8A is a table indicating a comparison result of the amount of updated data at the time of an input of first process data. Here, a kind of process data to be inputted first (that is, a kind of business process) is not limited in particular. Further, a "conventional form" means a database provided with a table for each of business processes, as shown in FIGS. 10 and 11. Further, a "difference of the amount of data" does not indicate a strict numerical value. The case of updating data stored in a conventional form table is compared with the case of updating data stored in a new form process flow table (that is, the process flow table PT, see FIG. 2, and hereinafter, referred to appropriately as a "new form" in the case of comparing it with the conventional form). In the case where the amount of data treated by the new form becomes larger, it is set to + (plus). In the case where the amount of data treated by the new form becomes smaller, it is set to - (minus). In the case where the amount of data treated by the new form is deemed to be the same as that of the conventional form, it is set to "0".

In this case, at the time of the input of the first process data, the amount of data treated by the new form becomes larger by the amount required for update of the status section. However, since the amount of data of the status section is small, it is thought that there is substantially no large difference between I/O data (input data and output data) in the conventional form and the new form.

On the other hand, FIG. 8B is a table indicating a comparison result of the amount of updated data at the time of an input of process data after a second process. Namely, it is a table indicating a comparison result of the amount of updated data at the time of an input of process data according to business processes included in the process flow for which a part of the main key section, the reference key section, the type section, the status section, the common data section and the process unique data section (for example, process unique data "received order date" and "received order text" according to a business process "received order") has already been inputted in the process flow table PT, for example. In this regard, in the case where other process data (for example, the process data (shipment instruction data) corresponding to the business process "shipment instruction") corresponding to the process data (received order data) registered in the received order table are inputted, for example, the "conventional form" is required to input the "received order number" and the "received order description" indicating the corresponding received order data as the shipment instruction data in addition to the data corresponding to the main key section, the reference key section, the type section, the common data section and the process unique data section according to the present embodiment (see FIGS. 2, 10 and 11) in order to define a correspondence relationship to the inputted process data.

In this case, since the new form updates only the status section and the process unique data section at the time of input of the process data after the second process, the amount of I/O data becomes smaller compared with the conventional form that requires all of the sections other than the status section.

Therefore, since the amount of I/O data of the new form becomes smaller than those of the conventional form, the new form is advantageous with respect to performance of the system.

Namely, since it becomes possible to reduce I/O of the database, it becomes possible to realize reduction of the amount of writing, reduction of a capacity of the whole database, and reduction of a processing load required for a search process of data. In this regard, the fact that a process (process data) does not extend to a plurality of tables also becomes one factor of the reduction of the processing load required for the search process.

Further, the new form has a merit that an input order of process data is set to a random order to an extent. Namely, for example, in the case where the type "inventory sales" is thought, the order of the process flow is limited to an order of a received order, a shipment instruction, delivery, delivery acceptance inspection and sales in the conventional form, and the order cannot be changed. This is because a relationship among business processes is expressed by causing data of the latter business process to have a main key of the former business process in a table structure of the conventional form (for example, the "received order number" and the "received order description" in the shipment instruction table, see FIGS. 10 and 11). On the other hand, data of related business processes are stored in the same entry (that is, the same row of the same table) in a table structure of the new form. For this reason, there is no restriction on the context among business processes, and this makes it possible to rearrange the order of business processes. Namely, for example, in the case where an order of actual businesses is "a received order after a shipment instruction", an input order of process data can be configured in accordance with the order of the actual businesses. For that reason, it is advantageous with respect to progress management (in other words, internal control) over the conventional form. In this regard, more specifically, the business order of a current wholesale business is "a received order after a shipment instruction".

Further, in the new form, it becomes possible to reduce a load required for an inquiry of progress of a process flow. Namely, in the case where it is confirmed how far the process flow proceeds, there is a need to confirm registration statuses of all tables in order from a table for a start slip to a table for a final slip in the table structure of the conventional form. For example, in the case where a type "inventory sales" is thought as an example, there is a need to confirm five tables for a received order, a shipment instruction, delivery, delivery acceptance inspection and billing. On the other hand, since a progress situation of a process flow is held in the table structure of the new form as the "status section", it becomes possible to confirm progress only by means of inquiry of one table and one entry. This is advantageous when to use or develop an inquiry screen of a progress situation.

Further, in the embodiment described above, the database (for example, the process flow DB 220) is configured so that the database is provided in a process flow data management server (for example, the core business server 200) that manages the process flow data generated for every process flow; and the process flow data management server includes a process flow data providing section for providing a part or all of the process flow data to a client terminal (for example, the clients 10, 20) in response to a request from the client terminal. Therefore, it becomes possible to establish a system in which a processing load required for providing data regarding a business flow (for example, process flow data indicating report information necessary for creation of the report) is reduced compared with conventional one.

In this regard, although it has not been mentioned in particular in the embodiment described above, the database (for example, the process flow DB 220) may be configured so as to include a progress situation determining condition table in which progress situation determining condition data are registered, the progress situation determining condition data being data indicating a determination condition of a progress situation of the process flow, and so that the process flow data management server (for example, the core business server 200) determines whether the status data (for example, the data stored in the status section of the process flow table PT, see FIG. 2.) satisfies the progress situation determining condition or not on the basis of the progress situation determining condition, and informs the client terminal (for example, the clients 10, 20) of a progress situation according to the progress situation determining condition determined to be satisfied.

FIG. 9 is an explanatory drawing showing an example of a storage state of progress situation determining condition data stored in the progress situation determining condition table. As shown in FIG. 9, the progress situation determining condition data according to the present embodiment contain types of process flow and progress situation determining conditions according to each of the types of the process flow.

Here, in the types of the process flow, various ones of different business processes such as sample shipment, service sales, a change of names (sales), a change of names (shipment), returned goods of sales (reference of original transaction), returned goods of sales (no reference of original transaction), adjustment of sale proceeds (plus), adjustment of sale proceeds (minus) and the like are thought in addition to the inventory sales described above.

Further, the "progress situation determining condition" is one indicating criteria for determination of a progress situation of a process flow, and in the present embodiment, "1" is set up to a business process necessary for every type of the process flow (for example, a business process set up by type in advance among a received order, a shipment instruction, delivery, delivery acceptance inspection and sales).

The core business server 200 determines that the entry of the process flow data is in a "complete" state (that is, determines that the process flow indicated by the process flow data is completed) in the case where the state of the status section corresponds with the progress situation determining condition data of the process flow data stored in the process flow table PT; and carries out a process (informing process) to inform that effect of a predetermined client (for example, the clients 10, 20).

By configuring it in this manner, it becomes possible to establish a system capable of determining a business performance status. In particular, since merely comparison between the status data and the progress situation determining condition data contained in the process flow data enables a process to determine the business performance status, it is possible to reduce a processing load required for determination of the business performance status compared with a conventional one that has need to refer to an input status of data stored in a plurality of tables.

In this regard, start timing of the determining process or the informing process of a progress situation may be the time when there is a request from a client terminal, or the time set up in advance.

Further, in the example of the progress situation determining condition table as described above, it is configured so that the progress situation determining condition data contain a completion condition for determining whether the process flow is completed or not. Therefore, it becomes possible to establish a system capable of readily determining completion of a series of businesses.

In this regard, the progress situation determining condition data are not limited to one for determining whether the process flow is in a "completion" state or not, and, for example, it may be configured so as to contain data for determining whether it is in a "50% completion" state or not. Further, it may be configured so that the progress situation determining condition data denote a kind of process data to be inputted until a predetermined period of time elapses from the time when the first process data are inputted.

Further, it may be configured so that the progress situation determining condition table is caused not to have a function to determine "whether all of data to be inputted are inputted or not" as described above, but to have a function to restrict an input of data "so as not to input data that are not to be input". In this case, for example, the core business server 200 may be configured so as to compare, in the case where the process data to be added are process unique data when to update the process flow table PT, a kind of the process unique data to be added with the progress situation determining condition table; and not to update the process flow table in the case where the kind of the process unique data to be added is one corresponding to a business process for which "1" is not set up to the progress situation condition table.

### Industrial Applicability

According to the present invention, it is useful to establish an ERP system capable of reducing a processing load required for update and/or search of data.

### Explanation of Reference numerals

- PT: process flow table
- 10: client
- 20: client
- 51: dedicated line
- 52: LAN
- 53: Internet
- 200: core business server
- 210: business application program DB
- 220: process flow DB
- 230: other DB
- 300: DWH server
- 500: integrated core business system

## Claims

1. A database comprising a process flow table, process flow data being registered in the process flow table, the process flow data containing various kinds of data on a process flow including a plurality of business processes,
wherein the process flow data are data containing status data, common data and process unique data,
wherein the status data are data indicating a progress situation of each of a plurality of business processes included in the process flow,
wherein the common data are data common among business processes included in the same process flow,
wherein the process unique data are data unique to each of the business processes included in the same process flow, and
wherein the status data are updated in the case where the process unique data are updated.

2. The database according to claim 1, wherein the database is provided in a process flow data management server that manages the process flow data generated for every process flow, and
wherein the process flow data management server comprises a process flow data providing section for providing a part or all of the process flow data to a client terminal in response to a request from the client terminal.

3. The database according to claim 2, further comprising:
a progress situation determining condition table in which progress situation determining condition data are registered, the progress situation determining condition data being data indicating a determination condition of a progress situation of the process flow, and
wherein the process flow data management server includes:
a progress situation determining section for determining whether the status data satisfies the progress situation determining condition or not on the basis of the progress situation determining condition; and
a progress situation informing section for informing the client terminal of a progress situation according to the progress situation determining condition that the progress situation determining section determines to be satisfied.

4. The database according to claim 3, wherein the progress situation determining condition data contain a completion condition for determining whether the process flow is completed or not.

5. A data management server for providing various kinds of data to a client terminal, the data management server comprising:
a process flow data storage section for storing process flow data containing various kinds of data on a process flow, the process flow containing a plurality of business processes;
a process flow data updating section for updating the process flow data in accordance with a progress situation of the process flow; and
a process flow data providing section for providing, to the client terminal, a part or all of the process flow data in response to a request from the client terminal,
wherein the process flow data are data containing status data, common data and process unique data,
wherein the status data are data indicating a progress situation of each of a plurality of business processes included in the process flow,
wherein the common data are data common among business processes included in the same process flow,
wherein the process unique data are data unique to each of the business processes included in the same process flow, and
wherein the process flow data updating section updates the status data in accordance with an update status of the process unique data.

6. A data managing program product for controlling an operation of a data management server so as to provide various kinds of data to a client terminal, the data managing program product causing the data management server to execute:
a process flow data updating process to update process flow data stored in a process flow data storage section in accordance with a progress situation of a process flow, the process flow data storage section storing therein process flow data containing various kinds of data on the process flow, the process flow containing a plurality of business processes; and
a process flow data providing process to provide, to the client terminal, a part or all of the process flow data in response to a request from the client terminal,
wherein the process flow data are data containing status data, common data and process unique data,
wherein the status data are data indicating a progress situation of each of a plurality of business processes included in the process flow,
wherein the common data are data common among business processes included in the same process flow,
wherein the process unique data are data unique to each of the business processes included in the same process flow, and
wherein, in the process flow data updating process, the data management server is caused to execute a process to update the status data in accordance with an update status of the process unique data.
